# EUROPEAN PATENT APPLICATION

(11) **EP 4 047 565 A1**
(43) Date of publication of application: **24.08.2022**
(21) Application number: 22155775.4
(22) Date of filing: 09.02.2022
(51) Int. Cl.: G06V 20/56, G06V 10/80, G06V 10/762, G06V 10/22, G06V 10/26

(54) **LOW LEVEL SENSOR FUSION BASED ON LIGHTWEIGHT SEMANTIC SEGMENTATION OF 3D POINT CLOUDS**

(30) Priority: 19.02.2021 US 202117180467
(71) Applicant: Teraki GmbH, 10785 Berlin (DE)
(72) Inventor: Hölzel, Matthew, Berlin (DE); Sabyasachi, Paul, Berlin (DE); Richart, Daniel L., Berlin (DE)
(74) Representative: Grünecker Patent- und Rechtsanwälte PartG mbB

(57) **Abstract**

A method and a system described herein provide sensor-level based data stream processing. In particular, concepts of enabling low level sensor fusion by lightweight semantic segmentation on sensors generating point cloud as generated from LIDAR, radar, cameras and Time-of-Flight sensors are described. According to the present disclosure a computer-implemented method for sensor-level based data stream processing comprises receiving a first data stream from a LIDAR sensor, removing a ground from the point cloud, performing clustering on the point cloud, and feature processing on the point cloud. The point cloud represents a set of data points in space.

## Description

### BACKGROUND

LIDAR sensors, radar sensors, cameras and other optical sensors produce high data rates. For example, high resolution cameras with 1080p and 4k resolution that produce large amounts of image data are commonly used. However, data transmission and especially data processing is limited by available bandwidth and processing power. This can render applications impossible, which rely on near or real-time image transmission.

It is with respect to these and other general considerations that the aspects disclosed herein have been made. Also, although relatively specific problems may be discussed, it should be understood that the examples should not be limited to solving the specific problems identified in the background or elsewhere in this disclosure.

### SUMMARY

A computer-implemented method and a system described herein provide sensor-level based data stream processing. In particular, methods of enabling low level sensor fusion by lightweight semantic segmentation on sensors generating point cloud as generated from LIDAR, radar, cameras and Time-of-Flight sensors are described.

Aspects of the present disclosure relate to a computer-implemented method for sensor-level based data stream processing comprises receiving a first data stream from a LIDAR sensor, removing ground from the point cloud, performing clustering on the point cloud, and feature processing on the point cloud. The point cloud represents a set of data points in space.

According to an embodiment, the computer-implemented method further comprises the steps of performing machine learning based model prediction based on the one or more features, and determining and labeling one or more objects captured in the first data stream.

According to an embodiment the clustering is performed on a transformed sparse representation of the point cloud. The dimension of the sparse representation of the point cloud is reduced.

According to an embodiment, the method further comprises sensor fusion with a radar sensor. This sensor fusion is achieved by transforming one or more points of the ROI of the LIDAR sensor to a corresponding 3D point in the coordinate system of the radar sensor, drawing a bounding box around the points in a frame of the radar sensor, and deriving objects in the radar sensor by performing a cropping operation on the radar sensor's point cloud with the bounding box.

According to an embodiment, the method further comprises sensor fusion with a camera sensor, This sensor fusion is achieved by transforming one or more points of the ROI of the LIDAR sensor to a corresponding 3D point in the coordinate system of the camera sensor, transforming the 3D points to 2D pixels in an image frame of the camera sensor, drawing a 2D bounding box or a polygon around the 2D points in the image frame of the camera sensor and deriving objects in the camera sensor by performing a cropping operation on the camera sensor's pixels with the bounding box.

According to an embodiment, the method further comprises generating, based on the ROIs, a non-uniform scanning pattern for the LIDAR sensor, scanning the environment according to the generated scanning pattern, and feeding back the scanned environment for improved perception.

According to an embodiment, the method further comprises techniques for improving compression of the data stream from the LIDAR sensor. These techniques comprise setting a first maximum deviation level to objects within ROIs, and setting a second maximum deviation levels to objects outside ROIs. The first maximum deviation level is smaller than the second maximum deviation level.

According to an embodiment, the method further comprises application of the Lidar ROI processing scheme on SLAM. The application of ROI processing removes dynamic objects from the scene and ensures relevant static objects are chosen for estimating trajectory of the vehicle and simultaneously building map of the environment.

Further aspects of the present disclosure relate to a perception system is provided that includes processing unit and a LIDAR sensor. The processing unit is configured to receive a first data stream from the LIDAR sensor, wherein the first data stream comprises a point cloud, removing a ground of an environmental scene within the first data stream, perform clustering on the ground-removed point cloud, and based on the clustered point cloud, create one or more features representing one or more region of interests. The point cloud represents a set of data points in space.

The above described embodiments can be combined with each other. The above described embodiments may also be implemented on a non-transitory computer-readable medium comprising computer-readable instructions, that, when executed by a processor, cause the processor to perform the above described steps.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF SUMMARY OF THE FIGURES

Non-limiting and non-exhaustive examples are described with reference to the following figures.
Fig. 1 is a diagram illustrating a system comprising a vehicle, a corresponding camera, another vehicle and a cloud environment;
Fig. 2 illustrates an exemplary environment that may be dealt with a vehicle implementing the herein described concepts. The environment comprises an exemplary scene including a traffic sign, a pedestrian, a street, a vehicle, a cyclist, trees and sky;
Fig. 3 is a flow diagram for a method of sensor-based data stream processing and segmenting of sensor data in a sensor stream;
Fig. 4 is a flow diagram for a method of sensor fusion;
Fig. 5 is a flow diagram for a method of steering LIDAR beams;
Fig. 6 is a general overview of an exemplary system of for aspects of the present disclosure; and
Fig. 7 is a flow diagram of ROI processing on LIDAR based SLAM

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete, and will fully convey the scope of the aspects to those skilled in the art. Aspects may be practiced as methods, systems or devices. Accordingly, aspects may take the form of a hardware implementation, an entirely software implementation or an implementation combining software and hardware aspects. The following detailed description is, therefore, not to be taken in a limiting sense.

Aspects of the present disclosure relate to systems and methods for processing data streams from different sensors. In particular, processing that is performed on images that are recorded by a LIDAR (Light detection and ranging), radar, time-of-flight (TOF), camera, etc., of a vehicle. With the rise of remote and autonomic driving, the amount of image data which is streamed is ever increasing. In many cases, recording images by optical sensors, such as LIDAR, radar, camera, etc. which are integrated into vehicles (or which can be removably attached to vehicles) is indispensable.

LIDAR sensors, radar sensors, cameras and other optical sensors produce high data rates. For example, high resolution cameras with 1080p and 4k resolution that produce large amounts of image data are commonly used. However, data transmission and especially data processing is limited by available bandwidth and processing power.

One application of the different sensors relates to perception, which is a growing field and has gained immense popularity after the recent advancements in the field of Artificial Intelligence (AI) and machine learning. With the advent of Convolutional Neural Networks (CNNs), vision-based object recognition schemes have got a major push and have even been outperforming humans on commonly accepted quality measures such as classification accuracies of labelled objects.

However, object detection solely based on 3D point clouds is a relatively new field and not as well developed as vision-based schemes. It is of utmost importance that not only cameras, but a multitude of sensors are involved in perceiving the environment to improve understanding and decision-making process of sensor fusion units. Such situations arise when a sensor data stream based on LIDARs could be used to perceive the environment in low-light situations or in bad weather conditions where a camera based perception scheme might not work at optimal performance. This is also important to improve reliability of a system and provide a means of graceful degradation in the unfortunate event of failure of one of the sensor modalities.

Different sensors provide distinct advantages and it makes sense to use a wide array of sensors and fuse the different types of sensor data together. Cameras are relatively inexpensive, provide rich color and textual information which comes in handy while detecting traffic signs, lane markings or road signs. LIDARs have a wide field of view (FOV), provide high-precision range information and are robust to lighting conditions. The complimentary nature of the sensors is essential in ADAS (Advanced Driver Assistance Systems) and AD (Autonomous Driving) applications. In contrast, making use of optimal bitrates of each sensor modality such as LIDAR/radar is typically not possible due to below mentioned RAM/CPU requirements to process the raw sensor data.

Similarly, a further recurrent bottleneck of SLAM (Simultaneous Localization and Mapping) based schemes is the fact that precise localization relies on capturing static objects from which to extract object and spatial features. Such a creation of static features is made difficult particularly in dynamic street situations with several people, bicyclists and motor bikes crossing into the scene, therefore rendering the extraction of static features difficult. In this case again SLAM benefits from pre-filtering the 3D point cloud data stream with particular objects known to be non-static such as people, bicycle drivers and thus enabling the SLAM based localization scheme to run only on static features. The fact that most 3D point cloud segmentation schemes require a GPU makes the extraction of static features in the 3D point cloud difficult.

Traditionally, deep neural networks rely on large processing capabilities of multi-core architectures having a heavy computational demand. Low latency along with fast inference times is paramount when dealing with real-time applications such as autonomous driving. The herein disclosed concepts help to overcome such shortcomings and present significant benefits to the end user. The herein disclosed concept possesses numerous benefits and advantages over conventional methods such as deep neural networks. The herein disclosed concept runs on a single thread of a Microprocessing Unit (MPU) with real-time inference capabilities.

Processing streams of data locally, also referred to as edge processing, enables quick and reliable intelligent processing without having to send data over to the cloud and moreover enables to reduce the processing requirements when fusing with multiple 3D point cloud data streams or with 3D point clouds extracted from further sensor modalities such as Radar/Cameras.

Reference will now be made in detail to the exemplary embodiments, examples of which are illustrated in the accompanying drawings, therein like reference numerals reference to like elements throughout.

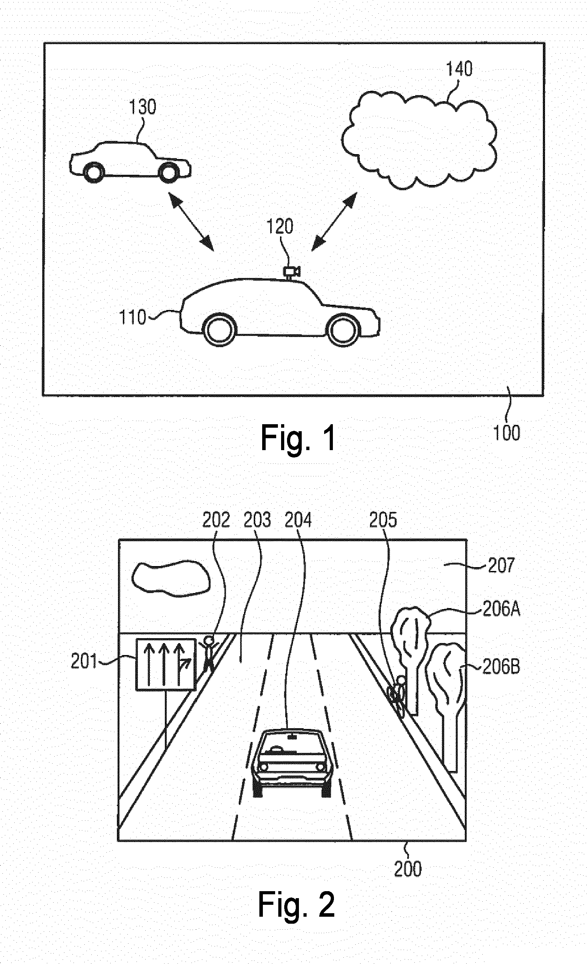

Fig. 1 illustrates a system 100 including a vehicle 110, a set of multiple sensors 120 of the vehicle 110, another vehicle 130, and a cloud environment 140. The set of multiple sensors 120 may include a camera, a LIDAR, a radar, a time-of-flight device and other sensors and devices that may be used for observing the environment of the vehicle 110.

The vehicle 110 may further comprise a processor configured to receive data from the multiple sensors 120 and to process the data before encoding the data. In one embodiment this data may be data from the LIDAR sensor, however one of skill in the art will appreciate any type of number of sensors can be employed with the aspects disclosed herein. The vehicle 110 may further comprise a memory for saving the encoded image. In addition, the vehicle 110 may further comprise an autonomous driving system that may be communicatively coupled to the processor of the vehicle and that may receive the encoded image. The autonomous driving system may use the encoded data for autonomously driving the vehicle 110. The vehicle 110 may comprise one or more further sensors, such as a distance sensor and a temperature sensor. The vehicle 110 may be further communicatively coupled to another vehicle 130 and/or a cloud environment 140. The multiple sensors 120 may be integrated anywhere in the vehicle 110 (e.g., next to a headlight, a rearview mirror, etc.) or may comprise sensors that can be attached and removed from the vehicle 110.

The other vehicle 130 may also comprise different sensors (not shown) for observing the environment, a processor, a memory, and/or an autonomous driving system. Likewise, the processor of the other vehicle 130 may also be configured to process an image by filtering the image before encoding the image, as described herein. The cloud environment 140 may include a cloud storage for storing the encoded image. The cloud environment 140, may be communicatively coupled to a remote driving system that may be used to control the vehicle 110 from remote by a remote driver.

Fig. 2 illustrates an exemplary environment 200 that may exist around the vehicle 110. The environment 200 may comprise one or more objects. The exemplary environment 200 of Fig. 2 illustrates several regions 201 - 207 that display several objects including a traffic sign 201, a pedestrian 202, a street 203, a car 204, a cyclist 205, two trees 206A, 206B and sky 207. It is apparent that it may be possible to define more regions comprising further objects such as cyclist way, lane marker, or cloud which are also present in environment 200.

The environment 200 may be a representative environment with which aspects of the present disclosure may be practiced. Notably, the vehicle 110 is depicted as a car, however, the present disclosure is not limited to be implemented by cars, but also other systems, vehicles and devices may be used for implementing the herein disclosed concepts. Other examples of vehicles 110 may be a drone or a delivery robot.

Consequently, the environment 200 may look quite different based on the vehicle 110 implementing the herein disclosed concepts. For example, in case of a drone, the environment 200 may comprise other drones and obstacles in the air, such as birds, wind turbines, buildings, aircrafts, etc.

The herein disclosed techniques pertain to a concept of enabling low level sensor fusion by lightweight semantic segmentation on sensors generating point clouds as generated from LIDAR, radar, camera, and/or Time-of-Flight sensors when capturing/observing the environment 200. In this regard, Regions of Interest (ROIs) within the environment 200 are detected by the sensors 120, generating point clouds as data points in space and then using the point clouds to fuse with other sensor modalities such as cameras to enable real-time sensor fusion.

The herein disclosed concept provides a perception system for memory constrained and embedded systems where the fusion of various sensor data streams at high resolution would normally be hindered due to too high sensor data input. On the other end, these applications currently relying on Neural Network based inference methods such as VoxelNet and Pixor require currently a high data input to operate with required minimal perception mean average precision (mAP). More importantly, most ML based perception systems typically require only 4% of the data captured in current sensor systems for its training in the cloud. In that sense ROI/TOI based processing of the point cloud data streams enables to already pre-filter the data streams at the sensor level and further speed-up sensor fusion of the point cloud data streams with multiple similar sensors or with other sensors such as Radars/Cameras with only 4% of the sensor data input.

According to one example, a good balance between accuracy and efficiency is provided. Fast inference with point cloud data input and enabling to filter out 96% of the data points already at the sensor level is achieved. Fast computation of ROIs on a System on a Chip (SoC) frees up resources for compute-intensive processing of other sensor streams such as cameras and enabling sensor fusion with different sensors from other sensor modalities. Additionally, quick inference can direct LIDARs to focus their attention on the ROIs and provide a mechanism for generating focused point clouds. Furthermore, according to one example, the herein disclosed concept can be used as a precursor to point cloud compression techniques allocating different bitrates to different objects, known as ROI-based point cloud compression. The scheme can be deployed in a variety of multi-sensor applications such as Advance Driver Assistance Systems (ADAS), Autonomous Driving (AD), Robotics, Augmented Reality (AR) or Unmanned Aerial Vehicles (UAV).

According to one example, the implementation of the herein disclosed concept is intra frame, thereby operating on a frame-by-frame basis. A mixture of unsupervised and supervised machine learning approaches is combined for efficient and fast segmentation on point clouds.

When dealing with exterior environments, such as the environment 200, ground is first removed from the scene captured by one of the sensors 120 to reduce clutter. For example, the LIDAR sensor is used to capture objects in the environment 200 of FIG. 2, and the texture of the street 203 is removed from the LIDAR data stream.

This unsupervised approach is a pre-processing step where similar points are grouped together into meaningful objects. This helps in subsequent acceleration of the supervised inference in the next stage.

Fast and accurate clustering may then be performed on the ground-removed cloud.

According to one example, Voxel Adjoint Clustering (VAC) is performed, where the operation is performed on transformed sparse representation of the original cloud ensuring x15-x20 speedup over conventional methods such as DBSCAN or PCL's Euclidean Clustering method is used. An advantage, among others, of Voxel Adjoint Clustering over other techniques is that it not only operates on sparse voxel space but additional speedup is achievable through dimensional reduction of point clouds. As is understood by one of skill in the art, typically in the industry the Euclidean clustering method is used for obtaining a similar benefit, but it is unable to meet the real-time requirements of large point clouds in the automotive/drone/robotics domain, concretely it is 20x slower in segmenting the point cloud.

However, the herein described concepts are not necessarily limited to VAC as clustering method and other clustering techniques may also be used.

To measure the accuracy of the clustering, a point-based "Intersection over Union" (IoU) score is proposed which gives a single evaluation metric on the extent of overlap between the ground-truth and predicted cluster. The metric is beneficial as the common Intersection over Union scores existing in the image domain based on bounding boxes does not scale well to 3D scenarios. As point clouds are sparse in nature, IoU metric differentiated on the basis of points can better depict the degree of overlap between ground-truth and predicted cluster. For all the annotated cars having a minimum of five hundred points in the KITTI dataset, the proposed algorithm can preserve 95 % of the instances with an IoU greater than 0.5. Such objects can be directly used in the camera frame by using extrinsic and intrinsic transformation from the point cloud to the camera coordinate system. This is useful as the shape information from LIDARs is usable in concurrence with vision-based systems to give even accurate and tight-fitting predictions. Grouping together of points also enables efficient noise-removal based on the cluster size and bounding box dimensions, an essential pre-processing step to preserve useful and salient information.

After clustering, new features may be created for each unsupervised proposal. The features are designed in such a way that it is invariant to rotational and translational transformation of points and are robust to sensor noise. Another important property of the custom feature set is that it is invariant to the order of points present in the cluster. The features are highly compact and dense representations fabricated using geometry and intensity information. The global feature set may then be fed to standard machine learning algorithms such as Support Vector Machines (SVMs) for inference.

The whole pipeline of the above processing may only need a single thread of a CPU to operate and may run significantly faster than the data acquisition rates of the sensor. The precision, recall and F1-score for car labelling has been shown to be 93.7%, 95.7% and 94.7% respectively on the test set validating the approach.

To compare the accuracy of the herein disclosed segmentation architecture with other networks, the F1-score is derived on one or more of the labelled objects exceeding the point-based IoU score greater than 0.5. The F1-score for the proposed method is 84.1% while VoxelNet method enables to obtain only a minimally improved F1 score of 88.8% on the test set. A differentiator of the herein disclosed concept is the latency per frame, which is made possible by the disclosed sensor fusion schemes in conjunction with LIDAR based 3D point cloud data streams or SoC based fusion with radar/camera generated 3D point clouds.

Only the 3D segmented ROI areas may be input at the fusion step with further sensor modalities, enabling the fusion of sensor data where so far such a process was technically not possible without a lower accuracy on the ROIs. Benchmarking on the KITTI dataset, the proposed method which runs on a single CPU thread outperforms VoxelNet 3D detection network by a factor of 150 on the CPU and a factor of 25 when run on the GPU. The various aspects disclosed herein are also 20 times faster than Pixor 3D detection network which runs on the GPU. The training times are order of magnitudes faster. The time taken to train 10k samples on a CPU is 10 minutes compared to 9 hours and 6 days on the GPU for Pixor and VoxelNet respectively.

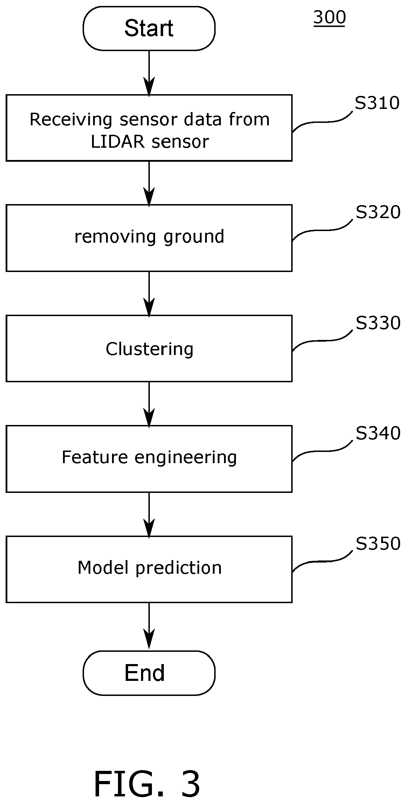

Figs. 3 to 6 illustrate flow diagrams disclosing additional details of the underlying technical concepts.

Fig. 3 is a flow diagram for an exemplary method 300 of sensor-based data stream processing and segmenting of sensor data in a sensor stream. A general order of the operations for the method 300 is shown in Fig. 3. The method 300 may include more or fewer steps or may arrange the order of the steps differently than those shown in Fig. 3. The method 300 can be executed as a set of computer-executable instructions executed by a computer system and encoded or stored on a computer readable medium. Further, the method 300 can be performed by gates or circuits associated with a processor, an ASIC, an FPGA, a SOC or other hardware device. Even though the example of Fig. 3 is explained using an exemplary LIDAR sensor, the concept of Fig. 3 and the aspects disclosed herein as a whole are not limited to LIDAR sensors, but also other sensors may be used, such as any type of Time of Flight (ToF) sensor.

In step S310, sensor data is received from a LIDAR sensor. The sensor data may be a data stream from the LIDAR sensor. The sensor data may be received by a processing unit that is external to the LIDAR sensor, but may also be received by a processing unit that is implemented with a LIDAR.

The data stream from the LIDAR sensor comprises a point cloud representing objects in the environment that are captured by the LIDAR. The point cloud represents a set of data points in space. Each point in the point cloud has its set of X, Y and Z coordinates in the LIDAR sensor coordinate system. For example, the points in the point cloud may represent the surface of another vehicle, such as a car or a bicycle, in the environment 200, but also other surfaces, such as the ground in the environment 200.

In step 320, the data stream is pre-processed for ground removal. For example, the points may be grouped in order to identify the ground of the environment 200. The ground may then be removed from the data stream as a pre-filter process, in order to reduce clutter. This unsupervised pre-processing step in accelerating the supervised inference later. Notably, not only the ground may be removed from the data stream, but also other objects identified as not important for processing, such as a ceiling in a tunnel or in a parking garage.

After the ground has been removed from the point cloud, clustering is performed in step S330. While there exist different approaches of clustering in the field, in some examples, Voxel Adjoint Clustering (VAC) is employed. As described earlier, one advantage of VAC is that the operation is performed on a transformed sparse representation of the original cloud ensuring x15-x20 speedup over conventional methods such as DBSCAN or PCL's Euclidean Clustering method. A further advantage of VAC over other techniques is that additional speedup is achievable through dimensional reduction of point clouds. As described earlier, the point-based Intersection over Union (IoU) score proves high efficiency of the VAC implementation with the herein disclosed techniques.

With the clustering of step 330, features within the point cloud objects are available and may be further processed in step 340. In particular, additional features may be created representing regions of interest. The features may be seen as starting point for many computer vision algorithms and in the present disclosure, the features are designed in such a way that they are invariant to rotational and translational transformation of points and are robust to sensor noise. As described earlier, the features may be highly compact and dense representations fabricated using geometry and intensity information.

In step 350, the global feature set may be fed to standard machine learning algorithms such as Support Vector Machines (SVMs) for inference of objects within the environment 200. This may include determining and labeling objects captured in the data stream, i.e. in the point cloud.

This approach of segmentation architecture for 3D point clouds has been proven in tests to be very efficient and one of the differentiators of the herein disclosed architecture is the latency per frame, as is utilized by the disclosed sensor fusion schemes with further LIDAR based 3D point cloud data streams or SoC based fusion with Radar/Camera generated 3D point clouds.

Another aspect of the herein disclosed techniques concerns the fusion of multiple sensors. The above described lightweight segmentation scheme in point clouds is used as a precursor to detect blobs in a scene. Blobs may provide a complementary description of image structures in terms of regions.

This is the first step to developing a sensor fusion scheme across sensors such as camera or Radar. This group of points can represent either a labelled or unlabeled entity.

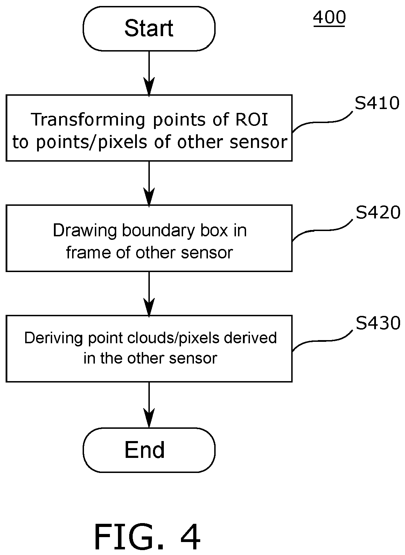

Fig. 4 is a flow diagram for a method 400 of sensor fusion. A general order of the operations for the method 300 is shown in Fig. 4. The method 400 may include more or fewer steps or may arrange the order of the steps differently than those shown in Fig. 4. The method 400 can be executed as a set of computer-executable instructions executed by a computer system and encoded or stored on a computer readable medium. Further, the method 400 can be performed by gates or circuits associated with a processor, an ASIC, an FPGA, a SOC or other hardware device. The starting point for method 400 may be after step S330 or S350 of Fig. 3, where the segmentation as described above has been performed.

Method 400 starts with step S410, where points of a ROI is transformed to points of another sensor. For example, in this step to developing a sensor fusion scheme across sensors such as camera or radar, the groups of points can represent either a labelled or unlabeled entity. The chunk of points may then be passed on to a processing unit (MPU). This processing unit can also be referred to as sensor fusion unit. Inside this unit, a mask may be generated in the radar or camera coordinate system. Points in the blob from the 3D Lidar coordinate system may first be transformed to corresponding 3D point in the camera/radar coordinates. In one example, this may be done with the help of an extrinsic calibration matrix between the sensor systems, i.e., between LIDAR and the camera/radar/etc.

Once, the 3D point cloud data segments are obtained in a radar system from the corresponding LIDAR system, a bounding box/convex hull is drawn around the points in the radar frame in step S420. As will be described later, for fusion with the camera system, further steps may be required.

In a drone/UAV scenario, the bounding box may represented using nine values (center in x dimension, center in y dimension, center in z dimension, length, width, height, roll, pitch and yaw). However, the bounding box representation in automotive/robotics scenarios may be governed by seven values without roll and pitch. After the bounding box generation process, point clouds which represent an entity is derived in the radar system by simply performing a cropping operation on the radar point cloud with the bounding box in step S430.

The radar point clouds, being sparse can benefit from the lightweight segmentation scheme from the dense LIDAR point clouds. The dense LIDAR point clouds in turn may benefit from the additional velocity information coming from the radar sensor which is used in the feature generation step to further increase labelled detection accuracies. This feedback loop may help in scenarios such as people detection where both the sensor modalities is used to extract geometry and movement to enhance detection.

As described earlier with regard to step S410, for the camera based fusion system, the rigid body transformation may be followed by an additional step of intrinsic transformation to convert a 3D point (x, y, z) to 2D pixel (u, v) in the image frame of the camera system. In this way, the corresponding pixels in the camera frame are also grouped together. Either a 2D bounding box or a polygon is constructed enclosing the projected points. In the same sense as in the radar, a feedback loop may help in further determination of the label of the object by fusing geometry information from the LIDAR and the color information from the camera sensor.

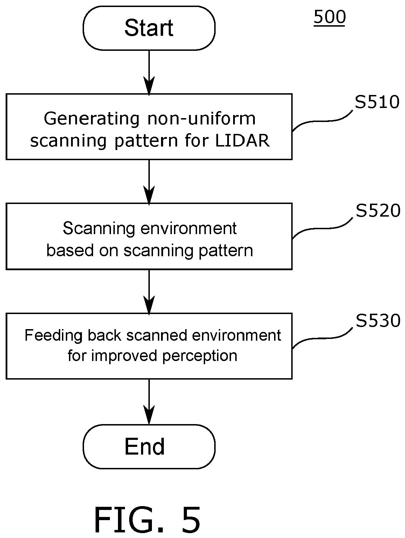

Fig. 5 is a flow diagram for a method 500 of steering LIDAR beams. A general order of the operations for the method 500 is shown in Fig. 5. The method 500 may include more or fewer steps or may arrange the order of the steps differently than those shown in Fig. 5. The method 500 can be executed as a set of computer-executable instructions executed by a computer system and encoded or stored on a computer readable medium. Further, the method 500 can be performed by gates or circuits associated with a processor, an ASIC, an FPGA, a SOC or other hardware device. In the recent years, companies have been pursuing different ways of generating the scanning system for the LIDAR. Four technologies which are most commonly used are: Mechanical spinning, Micro-Electro-Mechanical-System (MEMS), Flash and Optical Phased Arrays (OPA). From the LIDAR power equation, the received power in the photodetector decreases quadratically with the distance. This hinders the capability of the Lidar system to detect objects at high ranges.

A workaround for this is to increase the power of the laser, however limitations arise from the eye-safety requirements. LIDARs usually operate at two wavelengths, 850-950 nm and 1550 nm. LIDAR systems operating at 1500 nm, also known as Short Wave Infrared (SWIR) lasers are able to transmit to higher ranges than the Near Infrared (NIR) lasers operating at 850-950 nm. Nevertheless, for high-speed applications, even more range is needed which is commonly determined with the braking distance.

Another characteristic of LIDARs is that the number of points reflected back from an object reduces drastically with distance. This is a major setback to the performance of perception algorithms which need a good resolution of object, even at higher distances.

To overcome the issue of range and resolution at higher distances, the concepts disclosed herein provide an adaptive software-enabled scanning system. According to one example, the scanning pattern is not known a-priori but is determined based on the scene as further discussed below.

According to one example of the present disclosure, the lightweight segmentation scheme based on LIDARs may act as a trigger for the scanning pattern decision making process. In the automotive scenario, the Regions of Interest (ROI) is determined which can be car, pedestrian, cyclist or any object where it is desirable to focus more points. Based on the ROIs predicted by the algorithm, a mask is given as an input and a non-uniform scanning pattern is generated in step S510 of Fig. 5.

Based on the newly generated scanning pattern, new scans can be performed in Step S520. This scanning pattern in turn helps to predict the ROIs even more accurately in the subsequent frames of the data stream of the LIDAR sensor, since the scanned environment is fed back to the LIDAR system in step S530.

This feedback system based on a continuous software loop and intelligent signal processing is only possible when the run time of LIDAR detection is extremely fast as achieved with the present concept as described above. Furthermore, retraining of such ROI models already in use by various LIDAR vendors is a particular problem point tackled in the herein disclosed concepts. Ultimately the training of accurate ROI models robust on multiple situations (such as occlusion, interference, etc.) relies on acquiring similar scenes. In this scenario a lightweight segmentation scheme operating at only a small lower 4.7% of accuracy than the actual ROI enables to capture more similar situations in very limited RAM and CPU resources available in the SoC and sensor fusion unit in the car.

Another exemplary advantage and aspect of the disclosure relates to region of interest based point cloud compression.

Due to growing resolution needs of the 3D point cloud perception and mapping algorithms, companies are subsequently upgrading their LIDARs. However, with this improvement, it is becoming increasingly difficult to manage the resulting high data rates. The transmission limitations to the cloud are combated by employing the custom designed point cloud compression technique. A deterministic scheme is developed which not only preserves the number of points after encoding and decoding, but also sets a bound on the maximum deviation for one or more points (in LIDARs, the attributes are generally x, y, z and intensity). This maximum deviation is generally chosen as the sensor noise thereby having little to no impact on the performance of perception or mapping algorithm whilst maintaining a very high compression rate, typically x10-x20. The compression scheme so designed is then amalgamated with the lightweight segmentation scheme to yield ROI based point cloud compression scheme.

According to one example of the present disclosure, different maximum deviation levels are set to objects within the ROIs such as cars, pedestrians or cyclists to that from the non-ROIs such as buildings or trees. This ensures additional compression gain on top of a simple compression scheme whilst maintaining hard bounds on the objects that are required to preserve better.

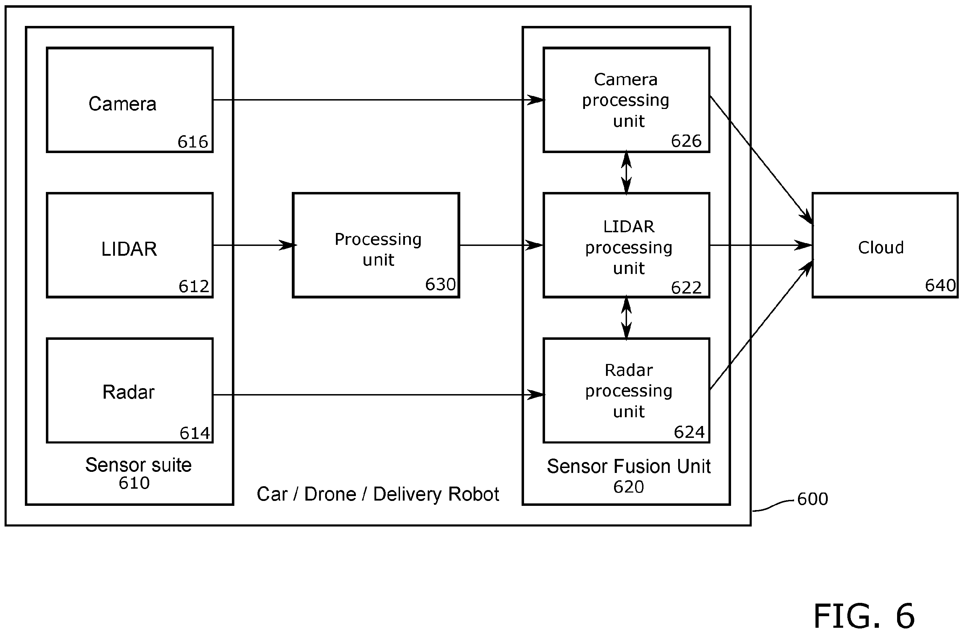

Fig. 6 is a general overview of an exemplary system 600 of for aspects of the present disclosure. As can be seen in Fig. 6, all units for the above described segmentation and sensor fusion may be embedded within a vehicle 600, which may be a car, a drone, a delivery robot or any other vehicle. The vehicle 600 may be identical to the vehicle 110 of Fig. 1. Although not shown, the aspects disclosed herein may also be performed by a general computing device comprising or in communication with one or more sensors.

According to one example, the vehicle may comprise a sensor suite 610, which may represent an ensemble of different sensors, such as LIDAR 612, radar 614, and camera 616, however, also other environment observing sensors may be comprised in the sensor suite 610. The sensor suite 610 may be identical to the set of sensors 120 of Fig. 1.

The LIDAR 612 may provide a raw 3D point cloud to the processing unit 630, which may be responsible for the segmentation as described earlier. After processing the raw 3D point cloud in the processing unit 630, a pre-labelled, feature processed 3D point cloud may be input to the sensor fusion unit 620.

The sensor fusion unit 620 may comprise additional processing units, such as LIDAR processing unit 622, radar processing unit 624 and camera processing unit 626. The radar processing unit 624 in the sensor fusion unit 620 may receive raw 3D point clouds from the radar 614. Similarly, the camera processing unit 626 in the sensor fusion unit 620 may receive raw images from the camera 616. However, even though, multiple processing units 622, 624, 626, and 630 are shown in Fig. 6, the disclosed aspects are not limited to having multiple separate processing units. Instead, all data streams, including raw images and raw 3D point clouds may be received and processed in one single processing unit.

As described earlier, the data streams of multiple sensors may be fused together, for example in the sensor fusion unit 620, where the LIDAR processing unit 622 provides ROI masks to the radar processing unit 624 and the camera processing unit 626. Likewise, the camera processing unit 626 and the radar processing unit 624 may process the data streams received from the camera 616 and radar 614, respectively, together with the ROI masks from the LIDAR processing unit and feed the gathered ROI data back to the LIDAR processing unit 622. According to one example, such processed data in the camera processing unit 626 and radar processing unit 624 may be consumed and processed within the vehicle, or in addition submitted to a cloud 640, where the data is further processed together with the data from the LIDAR processing unit 622.

In particular, the processing units 622, 624, and 626 may transmit its respective ROI compressed sensor streams to the cloud 640, as described earlier. The cloud 640 may be identical to the cloud 140 of Fig. 1 and may be used in the context of autonomous driving systems of the vehicle 600. All data streams captured by the different sensors of the sensor suite 610 and processed by the different processing units may be stored in the cloud 640.

Although not shown, system 600 may also comprises computer-readable media. Computer-readable media as used herein may include non-transitory computer storage media. Computer storage media may include volatile and nonvolatile, removable and non-removable media implemented in any method or technology for storage of information, such as computer readable instructions, data structures, or program tools. The computer storage media may comprise instruction that, when executed by the processing unit 630, cause the processing unit to perform one or of the methods disclosed herein.

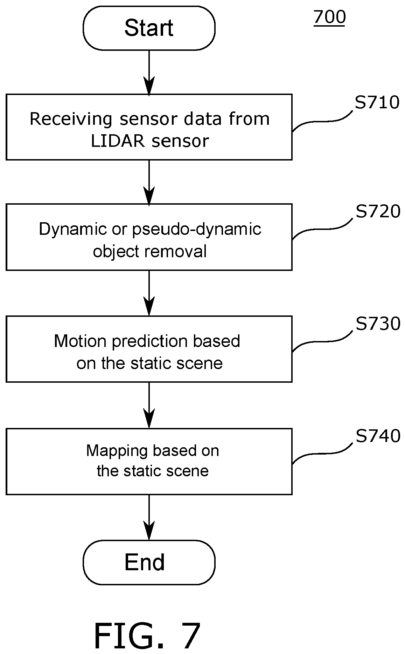

Fig. 7 is a flow diagram for a method 700 of ROI processing on Lidar based SLAM The method 700 may include more or fewer steps or may arrange the order of the steps differently than those shown in Fig. 7. The method 700 can be executed as a set of computer-executable instructions executed by a computer system and encoded or stored on a computer readable medium. Further, the method 700 can be performed by gates or circuits associated with a processor, an ASIC, an FPGA, a SOC or other hardware device. Starting point for method 700 may be after step S310 of Fig. 3, where the point clouds are received from LIDAR sensor.

Method 700 starts with step S710, where points are received from a LIDAR sensor. This step is followed by step S720 where pre-identified and non-relevant dynamic objects are removed from the scene. In the representative environment 200, this involves removal of dynamic or pseudo dynamic objects (static in current scene but may move in subsequent scenes) such as a pedestrian 202, a car 204 and a cyclist 205.

Consequently, the removal of non-relevant dynamic objects in environment 200 may look quite different based on the vehicle 110 implementing the herein disclosed concepts. For example, in case of a drone, the removal of birds and other drones is aided by the pre-processing scheme proposed.

Subsequently, a step S730 predicts the motion of the vehicle by extracting features from the static scene and matching it against the previously encountered scenes. The motion estimation step is also used to transform the point clouds from local coordinate system into world coordinate system. Once, the point clouds have a common reference frame, mapping is performing in step S740 by registering the point clouds together to build a 3D map of the static environment.

The pre-processing step with the help of lightweight segmentation scheme in method 700 helps to build consistent map of the environment and also prevent registration failure.

Such a scheme can also be used in the geometric layer of HD mapping where SLAM is necessary to not only estimate the pose of the vehicle but also build a detailed map of the environment.

The method is not limited to Lidar based SLAM approaches. This can be also used in conjunction to other sensors as depicted in 600 to aid map building process with visual SLAM using camera 616 or Radar based SLAM using Radar 614.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A computer-implemented method for sensor-level based data stream processing, the method comprising:
receiving a first data stream from a LIDAR sensor, wherein the first data stream comprises a point cloud, the point cloud representing a set of data points in space;
removing a ground of an environmental scene within the first data stream;
performing clustering on the ground-removed point cloud; and
based on the clustered point cloud, creating one or more features representing one or more region of interests, ROIs.

2. The computer-implemented method of claim 1, further comprising:
performing machine learning based model prediction based on the one or more features; and
determining and labeling one or more objects captured in the first data stream.

3. The computer-implemented method of claim 1 or 2, wherein the clustering is performed on a transformed sparse representation of the point cloud, wherein the dimension of the sparse representation of the point cloud is reduced.

4. The computer-implemented method of any one of claims 1 to 3, wherein the method further comprises:
transforming one or more points of the ROI of the LIDAR sensor to a corresponding 3D point in the coordinate system of the radar sensor;
drawing a bounding box around the points in a frame of the radar sensor; and
deriving point clouds derived in the radar sensor by performing a cropping operation on the radar sensor's point cloud with the bounding box.

5. The computer-implemented method of any one of claims 1 to 3, further comprising:
transforming one or more points of the ROI of the LIDAR sensor to a corresponding 3D point in the coordinate system of the camera sensor;
transforming the 3D points to 2D pixels in an image frame of the camera sensor;
drawing a 2D bounding box or a polygon around the 2D points in the image frame of the camera sensor; and
deriving pixels derived in the camera sensor by performing a cropping operation on the camera sensor's pixels with the bounding box.

6. The computer-implemented method of any one of claims 1 to 5, further comprising:
generating, based on the ROIs, a non-uniform scanning pattern for the LIDAR sensor;
scanning the environment according to the generated scanning pattern; and
feeding back the scanned environment for improved perception.

7. The computer-implemented method of any one of claims 1 to 6, further comprising improving compression of the data stream from the LIDAR sensor, and/or
wherein improving compression of the data stream from the LIDAR sensor further comprises:
setting a first maximum deviation level to objects within ROIs, and
setting a second maximum deviation levels to objects outside ROIs, wherein the first
maximum deviation level is smaller than the second maximum deviation level; and/or
further comprising performing improved map generation and application of ROI processing on a SLAM and HD mapping, wherein performing the improved map generation comprises:
performing dynamic or pseudo dynamic object removal using lightweight segmentation,
performing motion prediction of a vehicle on a static scene, and
building a 3D map of a static environment.

8. A perception system comprising a processing unit and a LIDAR sensor, the processing unit being configured to:
receive a first data stream from the LIDAR sensor, wherein the first data stream comprises a point cloud, the point cloud representing a set of data points in space;
remove a ground of an environmental scene within the first data stream;
perform clustering on the ground-removed point cloud; and
based on the clustered point cloud, create one or more features representing one or more region of interests, ROIs.

9. The perception system of claim 8, wherein the processing unit is further configured to:
perform machine learning based model prediction based on the one or more features, and
determine and label one or more objects captured in the first data stream; and/or
wherein the clustering is performed on a transformed sparse representation of the point cloud, wherein the dimension of the sparse representation of the point cloud is reduced.

10. The perception system of claim 8 or 9, further comprising a radar sensor, wherein the processing unit is further configured to:
transform one or more points of the ROI of the LIDAR sensor to a corresponding 3D point in the coordinate system of the radar sensor;
draw a bounding box around the points in a frame of the radar sensor; and
derive point clouds derived in the radar sensor by performing a cropping operation on the radar sensor's point cloud with the bounding box.

11. The perception system of claim 8 or 9, further comprising a camera sensor, wherein the processing unit is further configured to:
transform one or more points of the ROI of the LIDAR sensor to a corresponding 3D point in the coordinate system of the camera sensor;
transform the 3D points to 2D pixels in an image frame of the camera sensor;
draw a 2D bounding box or a polygon around the 2D points in the image frame of the camera sensor; and
derive pixels derived in the camera sensor by performing a cropping operation on the camera sensor's pixels with the bounding box.

12. The perception system of any one of claims 8 to 11, wherein the processing unit is further configured to:
generate, based on the ROIs, a non-uniform scanning pattern for the LIDAR sensor;
scan the environment according to the generated scanning pattern; and
feed back the scanned environment for improved perception.

13. The perception system of any one of claims 8 to 12, wherein the processing unit is further configured to improve compression of the data stream from the LIDAR sensor, and wherein improving compression comprises:
setting a first maximum deviation level to objects within ROIs, and
setting a second maximum deviation levels to objects outside ROIs, wherein the first
maximum deviation level is smaller than the second maximum deviation level; and/or
wherein the processing unit is further configured to build one or more maps of environment using one or more sensors, and wherein building one or more maps comprises:
performing dynamic or pseudo dynamic object removal using lightweight segmentation;
performing motion prediction of a vehicle on the static scene, and
building a 3D map of the static environment.

14. A computer-readable medium comprising computer-readable instructions, that, when executed by at least one processor, cause the at least one processor to perform a method comprising:
receiving a first data stream from a LIDAR sensor, wherein the first data stream comprises a point cloud, the point cloud representing a set of data points in space;
removing a ground of an environmental scene within the first data stream;
performing clustering on the ground-removed point cloud; and
based on the clustered point cloud, creating one or more features representing one or more region of interests, ROIs.

15. The computer-readable medium of claim 14, wherein the method further comprises:
transforming one or more points of the ROI of the LIDAR sensor to a corresponding 3D point in the coordinate system of the radar sensor,
drawing a bounding box around the points in a frame of the radar sensor, and
deriving point clouds derived in the radar sensor by performing a cropping operation
on the radar sensor's point cloud with the bounding box; and/or
wherein the method further comprises:
transforming one or more points of the ROI of the LIDAR sensor to a corresponding 3D point in the coordinate system of the camera sensor,
transforming the 3D points to 2D pixels in an image frame of the camera sensor;
drawing a 2D bounding box or a polygon around the 2D points in the image frame of the camera sensor, and
deriving pixels derived in the camera sensor by performing a cropping operation on the camera sensor's pixels with the bounding box.
